# EUROPÄISCHE PATENTSCHRIFT

(11) **EP 1 483 529 B1**
(45) Veröffentlichungstag und Bekanntmachung des Hinweises auf die Patenterteilung: **01.06.2005**
(21) Anmeldenummer: 03743809.0
(22) Anmeldetag: 19.02.2003
(51) Int. Cl.: F16M 11/06, H04N 5/232

(54) **Gelenkarm für ein Gerät zur optischen Aufnahme von Objekten**
Articulated arm for a device for optically capturing objects
Bras articulé pour un appareil destiné à la prise de vues optique d'objets

(30) Priorität: 08.03.2002 DE 10210244
(43) Veröffentlichungstag der Anmeldung: 08.12.2004
(73) Patentinhaber: Wolfvision GmbH, 6840 Götzis (AT)
(72) Erfinder: WOLF, Martin, A-6833 Klaus (AT); PFISTER, Wilfried, A-6712 Thürlingen (AT); SCHWAB, Martin, 91729 Obererlbach (DE)
(74) Vertreter: Kaminski, Susanne, Dr.
(86) Internationale Anmeldenummer: PCT/EP2003/001653
(87) Internationale Veröffentlichungsnummer: WO 2003/076843

(56) Entgegenhaltungen:
- EP-A- 0 480 232
- EP-A- 0 568 857
- DE-A- 3 822 008
- DE-C- 3 638 157
- US-A- 4 234 150
- US-A- 4 266 747

## Beschreibung

Die Erfindung betrifft einen Gelenkarm zum Positionieren und Ausrichten einer Aufnahmeeinrichtung zur optischen Aufnahme eines Objektes relativ zu einer für das Objekt vorgesehenen Auflagefläche in wenigstens einer Gebrauchsstellung und einer Transportstellung, nach dem Oberbegriff des Anspruchs 1.

Als Doppel-Parallelogrammarme ausgebildete Gelenkarme sind seit langem bekannt und haben sich bei verschiedensten Geräten, beispielsweise bei Tischlampen, bei verschiebbaren Bildschirmkonsolen oder bei Telefon-Schwenkarmen, vielfach bewährt. Ein über einen Doppel-Parallelogrammarm mit einer Basis verbundener Körper - beispielsweise die am Parallelogrammarm befestigte Beleuchtungseinrichtung und der Lampenfuss einer Schreibtischlampe - weisen in verschiedenen Positionen dieselbe Ausrichtung zueinander auf.

Aus der DE 38 22 008 A1 ist ein als Telefon-Schwenkarm ausgebildeter Doppel-Parallelogrammarm bekannt, dessen beide Parallelogrammarme - beispielsweise über ineinander greifende Zahnradsegmente - miteinander mechanisch gekoppelt sind. Dadurch wird eine gleichzeitige Schwenkbewegung der beiden Parallelogrammarme erzwungen.

Aus der US 4,234,150 ist ein derartig gekoppelter Doppel-Parallelogrammarm bekannt, der als Manipulatorarm ausgebildet ist. Zudem ist hier ein Antriebsmotor vorgesehen, durch den der an der Basis schwenkbar befestigte Doppel-Parallelogrammarm - ebenfalls über ineinander greifende Zahnradsegmente - antreibbar ist. Da die beiden Parallelogrammarme dieselbe Armlänge aufweisen, kann das freie Ende des anderen Parallelogrammarms entlang einer geraden Linie motorisch bewegt werden.

Aus der DE 36 38 157 PS ist ferner ein Auflichtprojektor bekannt, dessen Projektionseinrichtung über einen Doppel-Parallelogrammarm einerseits in Transportstellung auf der Auflagefläche des Auflichtprojektors aufliegend und andererseits in Gebrauchsstellung zur Auflagefläche beabstandet gehalten wird. Im Bereich der Verbindung der beiden Parallelogrammarme erzwingt eine Zahnradmechanik eine gleichzeitige Bewegung der Parallelogrammarme. Durch die Anordnung und auf Grund derselben Baulänge der beiden Parallelogrammarme bewegt sich die Projektionseinrichtung auf einer Senkrechten zur Auflagefläche.

Auch sind Overheadprojektoren und Geräte zur optischen Aufnahme von Objekten bekannt, deren Umlenkspiegeleinrichtung bzw. deren Aufnahmeeinrichtung auch über einen solchen Doppel-Parallelogrammarm relativ zur Auflagefläche in einer Transport- und einer Gebrauchsstellung, gegebenenfalls auch noch in weiteren Stellungen, gehalten wird.

Wird ein Körper über einen Doppel-Parallelogrammarm in bekannter Weise gehalten, so werden anwendungsspezifische Stellungen des Körpers nicht selbsttätig eingestellt, sondern müssen manuell nachgestellt werden. Dieses manuelle Nachstellen ist z.B. vom Einrichten einer Schreibtischlampe mit Doppel-Parallelogrammarm allgemein bekannt. Die gleiche Problematik stellt sich bei Aufnahmeeinrichtungen, die auf Grund ihrer Bauweise und Abmessungen in Gebrauchs- bzw. Transportstellung eine unterschiedliche Orientierung relativ zu einer Auflagefläche aufweisen sollten.

Ist in Gebrauchsstellung einer Einrichtung eine andere Ausrichtung als in Transportstellung erforderlich, so kann in an sich bekannter Weise eine am Doppel-Parallelogrammarm lösbar befestigte Einrichtung von Hand den jeweiligen Anforderungen entsprechend ausgerichtet werden. Das Ausrichten von Hand reduziert einerseits den Bedienkomfort und macht andererseits für ein präzises Ausrichten in einer vorgegebenen Richtung oft ein mehrfaches Ausrichten notwendig. Dies ist zeitaufwendig und in Gebrauch oft unbefriedigend.

Der Erfindung liegt daher die Aufgabe zugrunde, Mängel des Standes der Technik zu beheben. Insbesondere soll ein Gelenkarm zum Positionieren und Ausrichten einer Aufnahmeeinrichtung relativ zu einer Basis vorgeschlagen werden, über den die Aufnahmeeinrichtung in wenigstens zwei unterschiedlichen, vorgegebenen Stellungen des Arms unterschiedlich zur Basis ausrichtet wird.

Diese Aufgabe wird durch einen Gelenkarm gelöst, bei dem die kennzeichnenden Merkmale des unabhängigen Patentanspruchs 1 verwirklicht sind.

Weitere vorteilhafte oder alternative Aus- bzw. Weiterbildungen der Erfindung sind in den Merkmalen der abhängigen Patentansprüche beschrieben.

Wenn im Zusammenhang mit der Erfindung von Stangen die Rede ist, so sollen im weitesten Sinne länglich ausgebildete, im wesentlichen steife Körper verstanden werden. Diese Stangen können entweder massiv ausgebildet sein, oder ein an sich beliebiges Profil aufweisen. Die Profile der Stangen können beispielsweise so ausgebildet sein, dass parallel ausgerichtete, gegenüberliegende Stangen ineinander greifen.

Ein erfindungsgemässer Gelenkarm weist - wie ein herkömmlicher Doppel-Parallelogrammarm - einen Fussteil, einen Kopfteil, einen Gelenkteil und zwei Paar Stangen auf, die den Fussteil bzw. den Kopfteil mit dem Gelenkteil verbinden. Im Gegensatz zum Stand der Technik weist ein erfindungsgemässer Gelenkarm zudem eine am Kopfteil drehbar gelagerte Welle auf, die mit wenigstens einer der am Kopfteil schwenkbar befestigten Stangen in einer mechanischen Wirkverbindung steht. Diese Wirkverbindung hat ein Drehen der Welle relativ zum Kopfteil bei einem Schwenken der Stange zur Folge.

Unter einer mechanischen Wirkverbindung im Sinne der Erfindung sind beispielsweise ineinandergreifende Zahnradsegmente, Gestängemechaniken oder Kopplungen über Riemen bzw. Ketten zu verstehen.

Eine Weiterbildung der Erfindung sieht vor, einen erfindungsgemässen Gelenkarm mit wenigstens einem elastisch federnden Element, beispielsweise einer Spiral-, Blatt- oder Torsionsfeder, zu versehen. Das federnde Element ist in an sich bekannter Weise derart am Gelenkarm anzubringen, dass ein Schwenken der Stangen ein Spannen bzw. Entspannen des federnden Elements zur Folge hat. Die federnden Elemente wirken in an sich bekannter Weise dem Gewicht der gehaltenen Aufnahmeeinrichtung und des Gelenkarms entgegen.

Es ist aber auch möglich, die Gewichtskräfte übersteigende Federkräfte vorzusehen, um ein selbsttätiges Einnehmen der gestreckten Stellung durch den Gelenkarm zu bewirken. In diesem Fall wäre erfindungsgemäss ein den Gelenkarm in zusammengeklappter Stellung haltendes Rastelement vorzusehen.

Ferner kann auch wenigstes ein, insbesondere mechanisches, Bremselement am Gelenkarm angebracht werden, das einem Schwenken der Stangen Bremskräfte entgegensetzt. Im Zusammenspiel mit einer geeigneten Wahl des federnden Elements können damit erfindungsgemässe Gelenkarme geschaffen werden, die nicht nur in zusammengeklappter bzw. gestreckter Stellung, sondern auch in an sich beliebigen Zwischenstellungen eine Aufnahmeeinrichtung im Raum halten. Beispielsweise kann damit die Aufnahmeeinrichtungen in geringem Abstand zur Unterlage, auf der das Gerät aufgestellt ist, stabil gehalten werden. Dies ist insbesondere für neben dem Gerät gleichfalls auf der Unterlage aufgestellte Objekte von Vorteil. So erfordern seitliche Aufnahmen von beispielsweise Architekturmodellen, kleinen Maschinen, Aquarien, chemischen Versuchsaufbauten usw. derart ausgerichtete und positionierte Aufnahmeeinrichtungen.

Nachstehend wird die Erfindung anhand der Figuren der Zeichnung rein beispielhaft näher erörtert. Es zeigen:
- Figur 1: ein Gerät zur optischen Aufnahme von Objekten in Transportstellung, das mit einem Ausführungsbeispiel eines erfindungsgemässen Gelenkarms versehen ist, in Seitenansicht,
- Figur 2: eine Teilansicht des Geräts aus Figur 1 in Gebrauchsstellung mit gestrecktem Gelenkarm in Seitenansicht und
- Figur 3: das Gerät aus Figur 1 in Gebrauchsstellung mit teilweise zusammengeklapptem Gelenkarm in einer Schrägansicht.

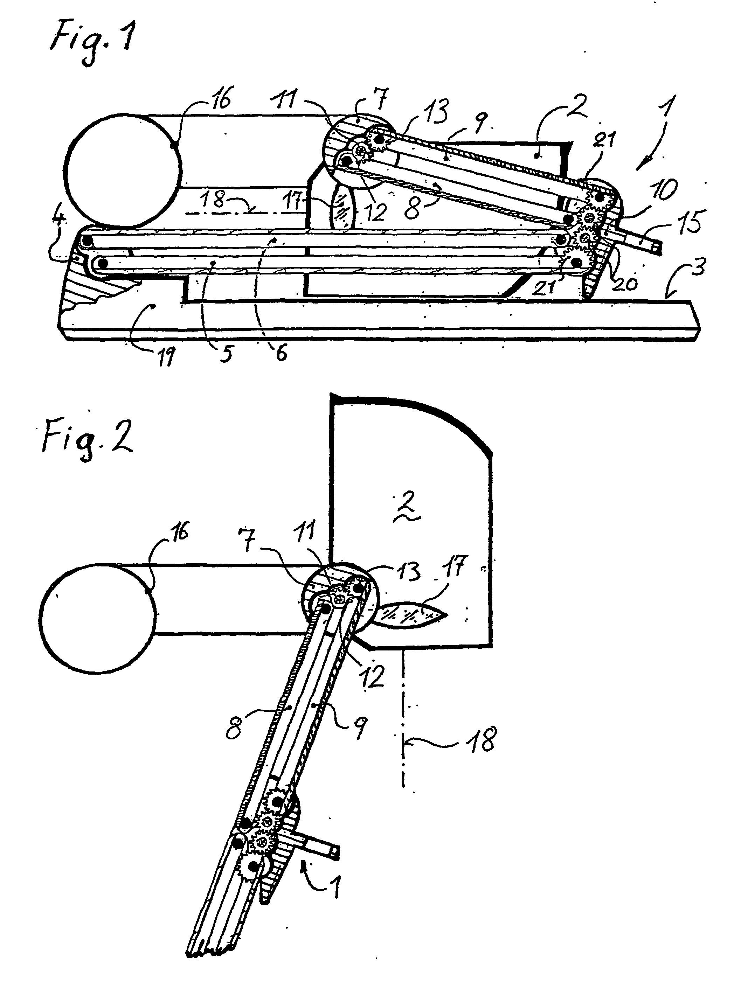

Figur 1 zeigt ein Gerät zur optischen Aufnahme von Objekten in Transportstellung mit einem erfindungsgemässen Gelenkarm 1 in Seitenansicht. Dabei nimmt der Gelenkarm 1 die zusammengeklappte Stellung ein. Das Gerät weist neben dem Gelenkarm 1 eine optische Aufnahmeeinrichtung 2 und eine Beleuchtungseinrichtung 16 auf.

Der im Schnitt dargestellte Gelenkarm 1 ist in an sich bekannter Weise als Doppel-Parallelogrammarm ausgebildet und weist einen Fussteil 4, einen Kopfteil 7, einen Gelenkteil 10, zwei fussseitige Stangen 5, 6 und zwei kopfseitige Stangen 8, 9 auf. Dabei sind die hier als U-Profile ausgebildeten, fussseitigen bzw. kopfseitigen Stangen 5, 6 bzw. 8, 9 beidseitig an ihren Enden jeweils mit einer Bohrung versehen. Einenends sind die fussseitigen bzw. kopfseitigen Stangen 5, 6 bzw. 8, 9 am Fussteil 4 bzw. am Kopfteil 7 über Befestigungsbolzen schwenkbar befestigt, die in die Bohrungen eingefügt sind. Anderenends sind die fussseitigen bzw. kopfseitigen Stangen 5, 6 bzw. 8, 9 ebenfalls über Bolzen am Gelenkteil 10 parallel zueinander ausgerichtet schwenkbar befestigt.

Der Fussteil 4 ist hier integral mit einem Basisgehäuse 19 verbunden ausgebildet. Die dem Gelenkarm 1 zugewandte Seite des Basisgehäuses 19 ist mit einer Auflagefläche 3 versehen, auf der ein durch die optische Aufnahmeeinrichtung 2 aufzunehmendes Objekt auflegbar ist. Es wäre selbstverständlich auch möglich, Fussteil und Basisgehäuse mehrteilig auszubilden und miteinander zu verbinden bzw. ein drittes Teil mit der Auflagefläche zu versehen und dieses dem Basisgehäuse zuzuordnen.

Der Gelenkteil 10 weist neben den Befestigungsbolzen zur schwenkbaren Befestigung der fussseitigen bzw. kopfseitigen Stangen 5, 6 bzw. 8, 9 zwei weitere Bolzen zur Lagerung zweier Zahnräder 20 auf. Diese stehen jeweils mit einem gelenkseitigen Zahnradsegment 21, das jeweils am gelenkseitigen Ende der fussseitigen Stange 5 bzw. der kopfseitigen Stange 9 angeordnet ist, im Eingriff und bilden so eine mechanische Wirkverbindung. Diese erzwingt in an sich bekannter Weise das gleichzeitige Schwenken der fussseitigen und kopfseitigen Stangen 5, 6 und 8, 9. Das Gelenkteil 10 ist hier zudem mit einem Griffstück 15 versehen, auf das von Hand Kräfte ausgeübt werden können, mit denen der Gelenkarm 1 von einer Stellung in eine andere gebracht wird.

Gemäss der Erfindung weist der Kopfteil 7 eine Welle 11 auf, die mit einer der kopfseitigen Stangen 8, 9 in mechanischer Wirkverbindung steht. Hier wird die Wirkverbindung von einem auf der Welle 11 koaxial angeordneten, ersten Zahnradsegment 12 gebildet, das in ein zweites Zahnradsegment 13 eingreift. Letzteres ist am kopfseitigen Ende der kopfseitigen Stange 9 angeordnet. Grundsätzlich könnte auch noch ein drittes Zahnradsegment am kopfseitigen Ende der anderen kopfseitigen Stange 8 angeordnet sein und ebenfalls mit dem ersten Zahnradsegment 12 im Eingriff stehen. Wird nun der Gelenkarm 1 von der zusammengeklappten Stellung in eine andere gebracht, so wird die mit dem zweiten Zahnradsegment 13 versehene, kopfseitige Stange 9 relativ zum Kopfteil 7 geschwenkt. Über die ineinandergreifenden Verzahnungen des ersten und des zweiten Zahnradsegmentes 12 und 13 wird erfindungsgemäss die Welle 11 - und damit auch die mit der Welle 11 gekoppelte Aufnahmeeinrichtung 2 - relativ zum Kopfteil 7 gedreht. In an sich bekannter Weise kann bei dieser Art der Wirkverbindung durch eine entsprechende Ausbildung der beiden Zahnradsegmente 12, 13 der Umfang der Drehung der Welle 11 in Abhängigkeit vom Umfang der Schwenkung der kopfseitigen Stangen 8, 9 festgelegt werden.

In diesem Ausführungsbeipiel ist die optische Aufnahmeeinrichtung 2 des Geräts über ein in Figur 1 nicht dargestelltes Rastelement - wie weiter unter näher beschrieben - auf der Welle 11 einrastend befestigt. Die Aufnahmeeinrichtung 2 zur optischen Aufnahme von Objekten ist hier mit einer Digitalkamera versehen, deren Objektiv durch eine Objektivlinse 17 schematisch dargestellt ist und das eine optische Achse 18 aufweist. Über die Digitalkamera werden die Aufnahmen der Objekte in elektrische Signale umgewandelt.

Über den Gelenkarm 1 wird in Transportstellung die gegebenenfalls länglich ausgebildete Aufnahmeeinrichtung 2 der Länge nach auf der Auflagefläche 3 aufliegend gehalten. Dabei ist die optische Achse 18 zur Auflagefläche 3 parallel ausgerichtet. Auch die Beleuchtungseinrichtung 16 wird über den Gelenkarm 1 parallel zur Auflagefläche 3 ausgerichtet auf dem Fussteil 4 aufliegend gehalten. Die Beleuchtungseinrichtung 16 ist direkt am Kopfteil 7 ebenfalls einrastend befestigt.

Auf Grund der unterschiedlichen Baulänge der fussseitigen bzw. der kopfseitigen Stangen 5, 6 bzw. 8, 9 reichen weder die Aufnahmeeinrichtung 2, die Beleuchtungseinrichtung 16 noch der Gelenkarm 1 über den Rand des Basisgehäuses 19 hinaus. In Kombination mit der Ausrichtung der Aufnahmeeinrichtung 2 und der Beleuchtungseinrichtung 16 weist das Gerät in Transportstellung - wie aus Figur 1 ersichtlich - äusserst kompakte Abmessungen auf.

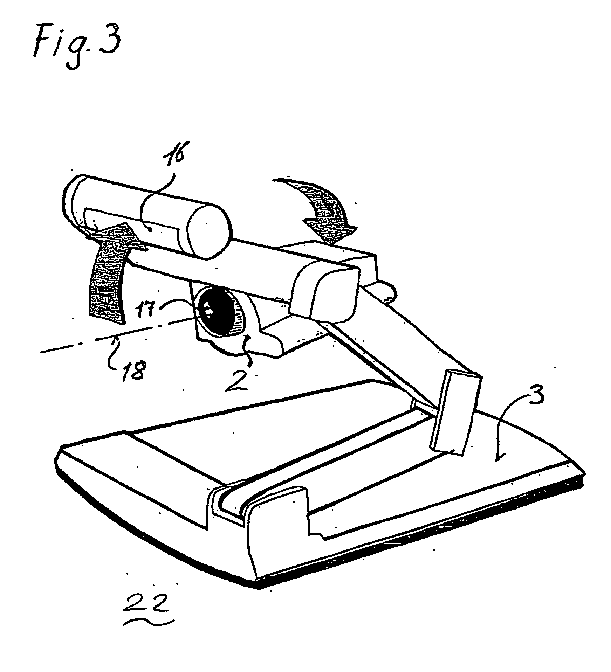

Figur 2 zeigt mit der Aufnahmeeinrichtung 2, der Beleuchtungseinrichtung 16 und einem Teil des Gelenkarms 1 eine Teilansicht des Geräts zur optischen Aufnahme von Objekten aus Figur 1. Im Gegensatz zu Figur 1 ist hier das Gerät in einer Gebrauchsstellung dargestellt. Dabei nimmt der Gelenkarm 1 die vorzugsweise gestreckte Stellung ein. Das Gerät kann jedoch auch - wie aus Figur 3 ersichtlich - in einer Zwischenstellung zwischen der zusammengeklappten Stellung und der gestreckten Stellung des Gelenkarms eine Gebrauchsstellung einnehmen.

Beim Übergang des Geräts von der in Figur 1 dargestellten Transportstellung in die in Figur 2 dargestellte Gebrauchsstellung wird bei diesem Ausführungsbeispiel die kopfseitige Stange 9 relativ zum Kopfteil 7 im Uhrzeigersinn um 90° geschwenkt. Da die ineinandergreifenden Zahnradsegmente 12 und 13 denselben Radius aufweisen, wird die Welle 11 relativ zum Kopfteil 7 gegen den Uhrzeigersinn ebenfalls um 90° gedreht. Die auf der Welle 11 einrastend befestigte Aufnahmeeinrichtung 2 wird dadurch auch um 90° gegen den Uhrzeigersinn gedreht. Die optische Achse 18 ist nun im rechten Winkel gegen die in Figur 2 nicht dargestellte Auflagefläche 3 gerichtet, und zwar im Wesentlichen gegen deren Zentrum. Die Aufnahmeeinrichtung 2 ist so für eine optische Aufnahme eines auf der Auflagefläche 3 aufgelegten Objektes geeignet ausgerichtet.

Durch die Welle 11 und die über die Zahnradsegmente 12 und 13 realisierte mechanische Wirkverbindung zwischen der Welle 11 und der kopfseitigen Stange 9 wird in diesem Ausführungsbeispiel die Aufnahmeeinrichtung 2 je nach Stellung - einerseits den in Figur 1 dargestellten Anforderungen der Transportstellung und andererseits den in Figur 2 dargestellten Anforderungen der Gebrauchsstellung des Geräts entsprechend - gemäss der Erfindung unterschiedlich ausgerichtet.

Im Gegensatz dazu ist die Beleuchtungseinrichtung 16 nicht an der Welle 11, sondern am Kopfteil 7, beispielsweise über eine das Kopfteil 7 umgreifende, mit einem Rastelement versehene Schelle, einrastend befestigt. In an sich bekannter Weise bleibt dadurch die Ausrichtung der Beleuchtungseinrichtung 16 beim Übergang von der Transportstellung in die Gebrauchsstellung relativ zum in Figur 2 nicht dargestellten Fussteil 4 unverändert. Ist für die Aufnahme eines auf der Auflagefläche aufgelegten Objekts eine zusätzliche Beleuchtung notwendig, so ist die Beleuchtungseinrichtung 16 dafür schon geeignet ausgerichtet.

Figur 3 zeigt das Gerät aus Figur 1 in einer Schrägansicht. Im Gegensatz zu Figur 1 ist hier das Gerät in einer Gebrauchsstellung dargestellt, bei welcher der Gelenkarm eine Zwischenstellung zwischen der zusammengeklappten Stellung und der gestreckten Stellung einnimmt. Über in Figur 3 nicht sichtbare, federnde bzw. bremsende Elemente kann der Gelenkarm die Aufnahmeeinrichtung 2 in unterschiedlichen Abständen zu einer Unterlage 22, auf der das Gerät aufgestellt ist, halten. In der in Figur 3 dargestellten Stellung des Geräts könnten optische Aufnahmen beispielsweise eines in Figur 3 nicht dargestellten, vor der Objektivlinse 17 auf der Unterlage 22 aufgestellten Architekturmodells gemacht werden. Bedingt durch die speziellen Anforderungen einer solchen Anwendung kann es hier erforderlich sein, die optische Achse 18 parallel zur Auflage 22 auszurichten. Auch sollte die Beleuchtungseinrichtung 16 nicht mehr gegen die Auflagefläche 3, sondern gegen das aufzunehmende Objekt gerichtet werden. Durch ein Ausüben vorgegebener, in Figur 3 illustrativ durch zwei Pfeile dargestellter Kräfte auf die Aufnahmeeinrichtung 2 bzw. die Beleuchtungseinrichtung 16 können dieselben aus der jeweiligen Einrastung gelöst und den speziellen Anforderungen entsprechend ausgerichtet werden.

Auch könnten gegebenenfalls noch weitere Raststellungen vorgesehen werden. Eine weitere Raststellung, welche die Aufnahmeeinrichtung 2 im gestreckten Zustand des Gelenkarms exakt auf einen, in Figur 3 nicht dargestellten, hinterleuchteten Diapositiv-Bereich ausgerichtet, wäre beispielsweise bei häufigeren Aufnahmen von Diapositiven hilfreich.

Ein derartiger Diapositiv-Bereich ist in der von derselben Anmelderin am selben Tag eingereichten deutschen Patentanmeldung mit dem Titel "Auflagefläche eines Geräts zur optischen Aufnahme von Objekten" beschrieben.

## Patentansprüche

1. Gelenkarm (1) zum Positionieren und Ausrichten einer Aufnahmeeinrichtung (2) zur optischen Aufnahme eines Objekts relativ zu einer für das Objekt vorgesehenen Auflagefläche (3) wenigstens in einer Transportstellung und einer Gebrauchsstellung mit:
- einem Fussteil (4), an dem zwei parallel ausgerichtete fussseitige Stangen (5, 6) einenends schwenkbar befestigt sind,
- einem Kopfteil (7), an dem zwei parallel ausgerichtete kopfseitige Stangen (8, 9) einenends schwenkbar befestigt sind, und
- einem Gelenkteil (10), an dem die zwei fussseitigen und die zwei kopfseitigen Stangen (8, 9) anderenends schwenkbar verbunden sind,
**dadurch gekennzeichnet, dass** der Kopfteil (7) wenigstens eine relativ zu diesem drehbare, mit der Aufnahmeeinrichtung (2) gekoppelte Welle (11) aufweist, wobei eine mechanische Wirkverbindung zwischen der Welle (11) und wenigstens einer der kopfseitigen Stangen (9) vorgesehen und derart ausgestaltet ist, dass die Aufnahmeeinrichtung (2) bei einem Übergang in die Gebrauchsstellung auf die Auflagefläche (3) ausgerichtet wird, wobei ein Schwenken der kopfseitigen Stange (8, 9) relativ zum Kopfteil (7) ein Drehen der Welle (11) relativ zum Kopfteil (7) und zur kopfseitigen Stange (9) erzwingt.

2. Gelenkarm (1) nach Anspruch 1, **dadurch gekennzeichnet, dass** die mechanische Wirkverbindung über ineinandergreifende Zahnradsegmente (12, 13) erfolgt, von denen ein erstes mit der Welle (11) und ein wenigstens zweites mit einer der kopfseitigen Stangen (8, 9) verbunden ist.

3. Gelenkarm (1) nach Anspruch 1, **dadurch gekennzeichnet, dass** wenigstens eine der fussseitigen Stangen (5, 6) und wenigstens eine der kopfseitigen Stangen (8, 9) in einer mechanischen Wirkverbindung stehen, die bei einem Bewegen der fussseitigen Stange (5) relativ zum Gelenkteil (10) ein Bewegen der kopfseitigen Stange (9) relativ zu diesem erzwingt.

4. Gelenkarm (1) nach Anspruch 1, **dadurch gekennzeichnet, dass** der Gelenkarm (1) wenigstens ein, insbesondere zwischen den fussseitigen Stangen (5, 6) bzw. den kopfseitigen Stangen (8, 9) angebrachtes, elastisch federndes Element aufweist, wobei dieses bei einem Schwenken der Stangen gespannt bzw. entspannt wird.

5. Gelenkarm (1) nach Anspruch 3, **dadurch gekennzeichnet, dass** der Gelenkarm (1) wenigstens ein, insbesondere zwischen den fussseitigen Stangen (5, 6) und dem Fussteil (4) angebrachtes, bremsendes Element aufweist, welches einem Schwenken der Stangen Reibkräfte entgegensetzt.

6. Gelenkarm (1) nach Anspruch 3, **dadurch gekennzeichnet, dass** eine Raste am Gelenkarm (1) vorgesehen ist, durch die der Gelenkarm (1) einer vorgegebenen Stellung einrastend gehalten wird.

7. Gelenkarm (1) nach Anspruch 3, **dadurch gekennzeichnet, dass** das Gelenkteil (10) mit einem Griffstück (15) versehen ist.

8. Gelenkarm (1) nach einem der vorhergehenden Ansprüche, **dadurch gekennzeichnet, dass** das Fussteil (4) mit der Auflagefläche (3) mittel- oder unmittelbar fest verbunden und die Welle (11) mit der optischen Aufnahmeeinrichtung (2) einrastend lösbar verbunden ist.

9. Gelenkarm (1) nach Anspruch 8, **dadurch gekennzeichnet, dass** die Welle (11) beim Übergang von der Transportstellung in die Gebrauchstellung des Gelenkarms (1) um ein Viertel einer Kreisdrehung relativ zum Kopfteil (7) gedreht wird.

10. Gelenkarm (1) nach Anspruch 8, **dadurch gekennzeichnet, dass** eine Beleuchtungseinrichtung (16) am Kopfteil (7) lösbar befestigt ist.

## Claims

1. Articulated arm (1) for positioning and aligning a recording apparatus (2) for optical recording of an object relative to a support surface (3) provided for the object, at least in a transport position and a position of use, comprising:
- a base part (4) to which two parallel base rods (5, 6) are pivotably fastened at one end,
- a top part (7) to which two parallel top rods (8, 9) are pivotably fastened at one end,
- an articulated part (10) to which the two base and the two top rods (8, 9), are pivotably connected at the other end,
**characterized in that** the top part (7) has at least one shaft (11) rotatable relative to said top part and coupled to the recording apparatus (2), a mechanical operative connection being provided between the shaft (11) and at least one of the top rods (9) and being designed in such a way that the recording apparatus (2) is aligned with the support surface (3) on transfer to the position of use, pivoting of the top rod (8, 9) relative to the top part (7) inevitably resulting in a rotation of the shaft (11) relative to the top part (7) and to the top rod (9).

2. Articulated arm (1) according to Claim 1, **characterized in that** the mechanical operative connection is effected via intermeshing gear wheel segments (12, 13), a first one of which is connected to the shaft (11) and at least one second one is connected to one of the top rods (8, 9).

3. Articulated arm (1) according to Claim 1, **characterized in that** at least one of the base rods (5, 6) and at least one of the top rods (8, 9) have a mechanical operative connection which, on movement of the base rod (5) relative to the articulated part (10), inevitably results in a movement of the top rod (9) relative thereto.

4. Articulated arm (1) according to Claim 1, **characterized in that** the articulated arm (1) has at least one elastically resilient element mounted in particular between the base rods (5, 6) or the top rods (8, 9), said element being tensioned or released on pivoting of the rods.

5. Articulated arm (1) according to Claim 3, **characterized in that** the articulated arm (1) has at least one braking element which is mounted in particular between the base rods (5, 6) and the base part (4) and which opposes pivoting of the rods with frictional forces.

6. Articulated arm (1) according to Claim 3, **characterized in that** a catch by means of which the articulated arm (1) is held snapped into a predetermined position is provided on the articulated arm (1).

7. Articulated arm (1) according to Claim 3, **characterized in that** the articulated part (10) is provided with a grip piece (15).

8. Articulated arm (1) according to any of the preceding Claims, **characterized in that** the base part (4) is indirectly or directly connected to the support surface (3) and the shaft (11) is detachably connected to the optical recording apparatus (2) by snapping in.

9. Articulated arm (1) according to Claim 8, **characterized in that**, on transfer from the transport position to the position of use of the articulated arm (1), the shaft (11) is rotated through a quarter of a revolution relative to the top part (7).

10. Articulated arm (1) according to Claim 8, **characterized in that** an illuminating apparatus (16) is detachably fastened to the top part (7).

## Revendications

1. Bras articulé (1) pour le positionnement et l'orientation d'un appareil (2), destiné à la prise de vues optique d'un objet par rapport à une face de pose (3) prévue pour l'objet, au moins en une position de transport et une position d'utilisation, avec :
- une partie pied (4), sur laquelle deux barres (5, 6) situées côté pied, orientées parallèlement, sont susceptibles de pivoter à une extrémité,
- une partie tête (7), sur laquelle deux barres (8, 9) situées côté tête, orientées parallèlement, sont susceptibles d'être reliées à pivotement à une extrémité, et
- une partie articulation (10), à laquelle les deux barres situées côté pied et les deux barres (8, 9) situées côté tête sont reliées à pivotement à l'autre extrémité,
**caractérisé en ce que** la partie tête (7) présente au moins un arbre (11) susceptible de tourner par rapport à celle-ci, couplé à l'appareil (2), une liaison fonctionnelle mécanique étant prévue entre l'arbre (11) et au moins l'une des barres (9) situées côté tête, et cette liaison étant réalisée de manière que l'appareil (2), lors d'un passage à la position d'utilisation, soit orienté en direction de la face de pose (3), sachant qu'un pivotement de la barre (8, 9) située côté tête, par rapport à la partie tête (7), contraint d'effectuer une rotation de l'arbre (11) par rapport à la partie tête (7) et par rapport à la barre (9) située côté tête.

2. Bras articulé (1) selon la revendication 1, **caractérisé en ce que** la liaison fonctionnelle mécanique se fait par l'intermédiaire de segments de roue dentée (12, 13) s'engrenant les uns dans les autres, dont un premier est relié à l'arbre (11) et au moins un deuxième est relié à l'une des barres (8, 9) situées côté tête.

3. Bras articulé (1) selon la revendication 1, **caractérisé en ce qu'**au moins l'une des barres (5, 6) situées côté pied et au moins l'une des barres (8, 9) situées côté tête sont intégrées en une liaison fonctionnelle mécanique qui, lors d'un déplacement de la barre (5) côté pied, par rapport à la partie d'articulation (10), contraint à effectuer un déplacement de la barre (9) située côté tête, par rapport à celle-ci.

4. Bras articulé (1) selon la revendication 1, **caractérisé en ce que** le bras articulé (1) présente au moins un élément déformable élastiquement, monté en particulier entre les barres (5, 6) côté pied respectivement les barres (8, 9) côté tête, cet élément tendu ou relâché lors d'un pivotement des barres.

5. Bras articulé (1) selon la revendication 3, **caractérisé en ce que** le bras articulé (1) présente au moins un élément à effet freinant, en particulier monté entre les barres (5, 6) côté pied et la partie pied (4), élément opposant des forces de friction à un pivotement des barres.

6. Bras articulé (1) selon la revendication 3, **caractérisé en ce que** sur le bras articulé (1) est prévu un cliquet, au moyen duquel le bras articulé (1) est maintenu avec un effet d'encliquetage d'une position prédéterminée.

7. Bras articulé (1) selon la revendication 3, **caractérisé en ce que** la partie d'articulation (10) est munie d'une poignée (15).

8. Bras articulé (1) selon l'une des revendications précédentes, **caractérisé en ce que** la partie pied (4) est reliée rigidement, indirectement ou directement, à la face de pose (3), et l'arbre (11) est relié de façon désolidarisable, avec effet d'encliquetage, à l'appareil (2) optique.

9. Bras articulé (1) selon la revendication 8, **caractérisé en ce que**, lors du passage de la position de transport à la position d'utilisation du bras articulé, l'arbre (11) est pivoté d'un quart de tour par rapport à la partie tête (7).

10. Bras articulé (1) selon la revendication 8, **caractérisé en ce qu'**un dispositif d'éclairage (16) est fixé de façon désolidarisable sur la partie tête (9).
